# EUROPEAN PATENT SPECIFICATION

(11) **EP 4 640 945 B1**
(45) Date of publication and mention of the grant of the patent: **04.11.2026**
(21) Application number: 25171882.1
(22) Date of filing: 23.04.2025
(51) Int. Cl.: D21H 13/26, D21H 13/50, D21H 15/02, D21H 27/00, H01B 1/24

(54) **CONDUCTIVE PAPER, PRODUCTION METHOD THEREOF, METALLIC ADHEREND AND PRODUCTION METHOD THEREOF**
LEITFÄHIGES PAPIER, HERSTELLUNGSVERFAHREN DAFÜR, METALLISCHE FÜGEFLÄCHE UND HERSTELLUNGSVERFAHREN DAFÜR
PAPIER CONDUCTEUR, SON PROCÉDÉ DE PRODUCTION, PARTIE ADHÉRÉE MÉTALLIQUE ET SON PROCÉDÉ DE PRODUCTION

(30) Priority: 25.04.2024 JP 2024071548
(43) Date of publication of application: 29.10.2025
(73) Proprietor: NSK-WARNER K.K., Tokyo 141-8560 (JP)
(72) Inventor: LUAN, Wenjing, Fukuroi-shi, Shizuoka, 437-8545 (JP); SETOI, Mutsumi, Fukuroi-shi, Shizuoka, 437-8545 (JP)
(74) Representative: Berggren Oy

(56) References cited:
- EP-B1- 1 788 651
- WO-A1-2012/026498
- JP-B2- 4 383 565

## Description

### BACKGROUND OF THE INVENTION

### Field of the Invention

The present invention relates to conductive paper, a production method thereof, a metallic adherend and a production method thereof.

### Description of the Related Art

Since conductive paper containing conductive materials such as carbon fibers is used to pass electricity between product constituting members and can be imparted with functions other than electrical conductivity by utilizing the characteristics of paper, it is used for various purposes such as complex-shaped ground brushes, fuel cell separators, gas diffusion electrode materials, and electromagnetic wave absorbing materials.

Patent Document 1 discloses: a porous conductive sheet obtained by subjecting a slurry containing conductive particles with a particle diameter of less than 1 µm, conductive particles with a particle diameter of 5 to 100 µm, carbon fibers, and organic fibers to a papermaking process; and an electrode material using the same.

Patent Document 2 discloses a fuel cell separator formed by: sandwiching a resin composition containing an ethylene vinyl alcohol copolymer and a conductive material between a plurality of composite sheets obtained by subjecting a slurry containing polyolefin-based resin fibers, particulate conductive materials, and fibrous conductive materials to a papermaking process; followed by welding and integration.

### PRIOR ART DOCUMENTS

### [Patent Documents]

[Patent Document 1] Japanese Unexamined Patent Application, First Publication No. 2014-103030
[Patent Document 2] Japanese Unexamined Patent Application, First Publication No. 2020-145014

Document EP1788651B1 discloses a porous web material for electrodes, having a thickness ranging from 0.11 to 0.2 mm.

Document WO2012/026498A1 discloses a thin conductive sheet having a thickness ranging from 0.16 to 0.27 mm.

Document JP4383565B2 discloses a friction paper comprising carbon fibers and fibrillated aramid fibers.

### SUMMARY OF THE INVENTION

### Problems to be Solved by the Invention

In recent years, as electric vehicles have come into practical use, potential differences and currents may occur between rotating members such as shafts and fixed members such as housings, which may cause problems. For example, in electric motors that generally employs an inverter drive system, a shaft voltage is generated due to the potential difference between the stator and the rotor, and when the current derived from the shaft voltage passes through the rolling bearing that supports this shaft, it causes a problem called "electrolytic corrosion" which damages the rolling bearing. In addition, various electronic control components located in the vicinity of the rotating members may generate voltages and currents as noise components of switching and the like, which may also cause a problem of electromagnetic compatibility that adversely affects other electronic control components via the rotating members.

Both of these problems occur because there is no conductive path between the rotating member and the fixed member, and the use of conductive paper, which is a paper material, in addition to high-strength materials such as metallic materials and crosslinked rubber materials, is being considered as a countermeasure. Since conductive paper is highly flexible and processable, and is thin, it is excellent in attachability and can be attached to members of various shapes. In addition, because it has low hardness, when there is a differential rotation with the mating surface (metallic member), wear on the mating surface can be suppressed. The wear resistance of itself is also has high. In addition, because it can eliminate oil films and exhibit electrical conductivity due to its porosity, it can also be applied to members that are lubricated by oil.

However, the electrical conductivity of conventional conductive paper is significantly inferior to that of metallic members. Therefore, in order to ensure sufficient electrical conductivity, it is necessary to increase the area and the applied load. Increasing the area and increasing the applied load result in an increase in drag torque, a decrease in durability, and the like.

In addition, although the conductive path between the rotating member and the fixed member is required to have strength against shear deformation caused by the differential rotation with the mating surface and heat resistance to withstand the sliding heat, conventional conductive paper does not satisfy these requirements. For example, although the porous conductive sheet of Patent Document 1 and the fuel cell separator of Patent Document 2 are reinforced with a resin, because the resin is a thermoplastic resin, it softens due to sliding heat and the strength decreases. Furthermore, since the fuel cell separator of Patent Document 2 has a resin composition sandwiched between composite sheets, it exhibits poor oil film removability and, in an oil environment, poor electrical conductivity.

The present invention has been made in consideration of the above circumstances, and aims to provide conductive paper with excellent electrical conductivity, strength, and heat resistance, a production method thereof, and a metallic adherend using this conductive paper and a production method thereof.

### Means for Solving the Problem

The present invention is defined in the appended claims.

### Effects of the Invention

According to the present invention, it is possible to provide conductive paper with excellent electrical conductivity, strength, and heat resistance, a production method thereof, and a metallic adherend using this conductive paper and a production method thereof.

### DETAILED DESCRIPTION OF THE INVENTION

Embodiments of the present invention will be described below.

### [Conductive paper]

Conductive paper according to one embodiment of the present invention contains a paper substrate and a cured product of a thermosetting resin (cured thermosetting resin). At least a portion of the cured thermosetting resin is impregnated into the paper substrate.

### <Paper substrate>

The paper substrate contains at least a carbon fiber and a fibrillated fiber.

The carbon fiber is a fibrous carbon-based material.

The carbon fiber constitutes a skeleton of the paper substrate. Further, the carbon fiber forms a conductive network within the paper substrate to exhibit electrical conductivity.

A fiber length of the carbon fiber within the paper substrate is preferably from 0.1 mm to 6.5 mm, and more preferably from 0.3 mm to 2.0 mm. When the fiber length is equal to or more than the above lower limit value, the carbon fibers are likely to form a mesh structure with each other within the paper substrate, which tends to improve the electrical conductivity of the conductive paper. When the fiber length is equal to or less than the above upper limit value, the reinforcing effects due to the fibrillated fiber increase, which tends to improve the strength of the conductive paper.

The fiber length of the carbon fibers in the paper substrate and the conductive paper is measured by extracting the carbon fibers by thermal decomposition and stirring, and by image analysis of the extracted fibers.

A fiber diameter of the carbon fibers is preferably from 6 to 15 µm, and more preferably from 7 to 10 µm. When the fiber diameter is equal to or more than the above lower limit value, the amount of electric charge that can move within a single fiber increases, and the single fiber tends to have excellent electrical conductivity. When the fiber diameter is equal to or less than the above upper limit value, the number of carbon fibers relative to the weight of carbon fibers contained in the paper substrate increases, and the conductive network properties tend to be excellent. The preferred fiber diameter range of the carbon fibers is determined by the balance between improving the electrical conductivity of the single fiber and improving the conductive network properties.

The fiber diameter is measured by microscopic observation of the cross section of the carbon fiber generated by a laser or the like using an electron microscope or the like. In the case of fibers with a flat cross section, the average value of the long diameter and the short diameter is taken as the fiber diameter.

Examples of the carbon fibers used in the present embodiment include polyacrylonitrile (PAN)-based carbon fibers, pitch-based carbon fibers, phenol-based carbon fibers, and rayon-based carbon fibers.

Only one type of carbon fiber may be used, or two or more types thereof may be used in combination.

A ratio of carbon fiber contained in the paper substrate is from 50 to 80% by mass, with respect to the total mass of the paper substrate. When the ratio of carbon fiber is equal to or more than the above lower limit value, the conductive network properties of the carbon fiber are enhanced, and the conductive paper tends to exhibit even better electrical conductivity. When the ratio of carbon fiber is equal to or less than the above upper limit value, the ratio of fibrillated fiber that can be blended increases, the increased ratio of fibrillated fiber increases the reinforcing effects of the fibrillated fiber, and the conductive paper tends to exhibit even better strength.

A fibrillated fiber refers to a fiber in a state in which an organic fiber is beaten to fluff the fibril component of the fiber.

The fibrillated fiber constitutes the skeleton of the paper substrate together with the carbon fiber. Further, when the paper substrate contains a fibrillated fiber, the entanglement between the fibers is increased by the fibrillated fiber, thereby improving the strength of the paper substrate and the conductive paper. In addition, although the inclusion of fibrillated fiber in the paper substrate reduces the carbon fiber content of the paper substrate, since the number of contact points between the carbon fibers increases due to the improved entanglement effects of the fibrillated fiber, the conductive network properties of the paper substrate actually improve, thereby improving the electrical conductivity of the conductive paper.

The degree of fibrillation of fibrillated fiber is quantified by freeness and specific surface area. In particular, since the quantification by freeness is easy and simple and serves as an alternative indicator of the ease of entanglement, it is often employed to evaluate the degree of fibrillation.

The freeness of fibrillated fibers is from 150 to 600 mL. The freeness is one of the indicators of fibrillation. When the freeness is equal to or less than the above upper limit value, sufficient entanglement between the fibers occurs, and the conductive paper tends to exhibit even better strength and electrical conductivity. When the freeness is equal to or more than the above lower limit value, the oil film removability is maintained, and the electrical conductivity under oil lubrication tends to be further improved.

The freeness is the Canadian standard freeness measured in accordance with JIS P 8121-2:2012.

The organic fiber in the fibrillated fiber is one or more selected from the group consisting of a cellulose fiber, an aramid fiber, an acrylic fiber, and a polyolefin fiber.

Examples of the cellulose fiber include a plant cellulose fiber, which is obtained from natural plants such as cotton and hemp as main raw materials and is classified as a seed hair fiber, a bast fiber, of a vein fiber; a regenerated cellulose fiber, which is obtained by extracting cellulose from trees and wood, followed by a chemical treatment; and a semisynthetic fiber, which is an acetate obtained by partially or entirely acetylating the hydroxyl groups in cellulose through a chemical reaction.

Examples of the aramid fiber (aromatic polyamide fiber) include polyparaphenylene terephthalamide, copolyparaphenylene-3,4'oxydiphenylene-terephthalamide, and polymetaphenylene isophthalamide.

Examples of the acrylic fiber include polyacrylonitrile, acrylonitrile polymers, and acrylonitrile copolymers.

Examples of the polyolefin fiber include polyethylene, polypropylene, ethylenepropylene copolymers, polycycloolefins, and polymethylpentene.

As the organic fiber, an aramid fiber, an acrylic fiber, and a polyolefin fiber are preferred from the viewpoint of heat resistance.

One type of these fibrillated fibers may be used alone or two or more types thereof may be used in combination.

An amount of the fibrillated fibers is from 30 to 100% by mass, with respect to the carbon fibers. When the amount of the fibrillated fibers is equal to or more than the above lower limit value, sufficient entanglement between the fibers occurs, and the conductive paper exhibits excellent strength and electrical conductivity. When the amount of the fibrillated fibers is equal to or less than the above upper limit value, the conductive network properties of the carbon fibers can be sufficiently secured, and the electrical conductivity is excellent.

The paper substrate may further contain other components in addition to the carbon fibers and the fibrillated fibers as long as the object of the present invention is not hindered.

Examples of the other components include fiber dispersants, paper strengthening agents, flocculants, thermoplastic resins having roles as the so-called binder components, fibrous or particulate organic compounds, and fibrous or particulate inorganic compounds.

One type of these other components may be used alone or two or more types thereof may be used in combination.

### <Cured thermosetting resin>

The cured thermosetting resin functions as a reinforcing material that reinforces the paper substrate. The conductive paper exhibits excellent strength because at least a portion of the cured thermosetting resin is impregnated into the paper substrate. In addition, since the cured thermosetting resin exhibits better heat resistance than that of the thermoplastic resin, the strength of the conductive paper is less likely to decrease even when the temperature rises due to sliding heat or the like, and the conductive paper exhibits excellent heat resistance.

The thermosetting resin may be any resin that is brought into a varnish-like state to make impregnation possible and is thermally cured, and examples thereof include a phenolic resin, a modified phenolic resin, an epoxy resin, a modified epoxy resin, a polyimide resin, a silicone resin, a polyester resin, a polyurethane resin, and a gum resin.

Examples of modified components of modified phenolic resin and modified epoxy resin include oil, rubber, cashew, acrylic, and naturally derived components.

A cured product of a liquid rubber corresponds to the gum resin. Examples of the liquid rubber include a liquid butadiene rubber, a liquid isoprene rubber, a liquid styrene butadiene rubber, a liquid fluororubber, a liquid silicone rubber, and a liquid urethane rubber. In addition to a crosslinking agent such as isocyanate, various drugs in order to promote the crosslinking reaction may be used for curing the liquid rubber.

Components other than the resin component may be added to the thermosetting resin as long as the object of the present invention is not hindered. Examples of components other than the resin component include a surface tension modifier and a fibrous or particulate organic compound or inorganic compound, which are contained in or added to the resin solution in order to improve impregnation properties.

Among these, a phenolic resin and a modified phenolic resin are preferred as the thermosetting resins from the multifaceted viewpoints of heat resistance, oil resistance, and strength.

One type of these thermosetting resins may be used alone or two or more types thereof may be used in combination.

A ratio of the cured thermosetting resin contained in the conductive paper is preferably from 10 to 55% by mass and more preferably from 20 to 40% by mass with respect to the total mass of the conductive paper. When the ratio of the cured thermosetting resin is equal to or more than the above lower limit value, the strength tends to be further improved. When the ratio of the cured thermosetting resin is equal to or less than the above upper limit value, the electrical conductivity and oil film removability tend to be further improved.

### <Characteristics of conductive paper>

A porosity of the conductive paper is preferably from 30 to 95%, and more preferably from 50 to 90%. When the porosity is equal to or less than the above upper limit value, the strength and electrical conductivity are further improved. When the porosity is equal to or more than the above lower limit value, the oil film removability is enhanced, and the electrical conductivity under oil lubrication is further improved.

The porosity is a value measured by a mercury porosimeter.

The conductive paper of the present embodiment is preferably able to withstand differential rotation with a rotating member, and shear strength can be mentioned as an indicator of that strength.

The shear strength of the conductive paper is preferably 0.1 MPa or more, and more preferably 0.2 MPa or more. When the shear strength is equal to or more than the above lower limit value, the load applied to the conductive paper can be increased, making it useful for applications requiring high electrical conductivity.

A thickness of the conductive paper is from 0.3 to 1.0 mm. When the thickness of the conductive paper is equal to or more than the above lower limit value, the durability life determined by wear and settling is further improved. When the thickness is equal to or less than the above upper limit value, since the distance over which electricity is passed in the thickness direction of the conductive paper becomes shorter, the electrical conductivity in the thickness direction of the conductive paper is further improved.

### <Method for producing conductive paper>

The conductive paper of the present embodiment can be produced, for example, by the following method.

A method for: preparing a slurry containing at least a carbon fiber and a fibrillated fiber, and in which an amount of the aforementioned fibrillated fiber is from 10 to 120% by mass with respect to the aforementioned carbon fiber; obtaining a paper substrate by subjecting the aforementioned slurry to a papermaking process; impregnating the aforementioned paper substrate with a thermosetting resin; and heating the aforementioned paper substrate impregnated with the aforementioned thermosetting resin to cure the aforementioned thermosetting resin.

### (Preparation of Slurry)

The slurry can be prepared by dispersing the carbon fiber, the fibrillated fiber, and other components as necessary, in water.

The respective commercially available products may be used as the carbon fiber, fibrillated fiber, and other components, or those produced by known methods may be used. The fibrillated fiber can be obtained, for example, by fibrillating a fiber by a known method. Examples of the fibrillation method include a method of beating a fiber using a beater, refiner, or the like.

The dispersion method is not particularly limited, and methods conventionally used for preparing a pulp slurry in paper production can be employed. For example, it can be carried out using a disintegrator (pulper), beater, refiner, or the like.

### (Papermaking)

A papermaking process (wet papermaking process) using a slurry can be carried out by a known method. For example, it can be carried out using a Fourdrinier or cylinder paper machine.

If necessary, a paper product formed by a papermaking process may be impregnated with a thermoplastic resin solution by coating or immersion to obtain a paper substrate in order to improve the strength of the paper substrate.

Further, this thermoplastic resin solution may also contain components other than the resin component as long as the object of the present invention is not hindered. Examples of components other than the resin component include a surface tension modifier and a fibrous or particulate organic compound or inorganic compound, which are contained in or added to the resin solution in order to improve impregnation properties.

### (Impregnation of thermosetting resin)

As a method for impregnating a paper substrate with a thermosetting resin, a method in which the paper substrate is impregnated with a varnish containing the thermosetting resin and a solvent by coating or immersion, followed by drying (removal of the solvent) is preferred. By impregnating the thermosetting resin in this manner, the entire paper substrate can be evenly reinforced with the thermosetting resin, as compared with a case where the thermosetting resin is added internally to the paper substrate.

The solvent for the varnish may be any solvent capable of dissolving the thermosetting resin, and a solvent having a low viscosity is preferred in order to improve the impregnation properties into the paper substrate, and a solvent having a high volatility is preferred in order to facilitate the removal of the solvent.

The varnish may contain components other than the resin component as long as the object of the present invention is not hindered. Examples of components other than the resin component include a surface tension modifier and a fibrous or particulate organic compound or inorganic compound, which are contained in or added to the resin solution in order to improve impregnation properties.

Examples of the method for impregnating the paper substrate with the varnish include a method of applying the varnish to one or both sides of the paper substrate, and a method of immersing the paper substrate in the varnish.

Drying may be performed by drying by heating or air drying, as long as the solvent of the varnish can be removed. The temperature for drying by heating is, for example, from 50 to 200°C.

### (Curing)

The heating conditions for the paper substrate impregnated with the thermosetting resin can be appropriately selected in accordance with the thermosetting resin to be used, as long as the thermosetting resin can be cured. In the case of a phenolic resin, the heating conditions are generally from 120 to 300°C for about 10 to 100 minutes.

After curing, if necessary, treatments such as surface polishing, additional heating, compression molding, thermocompression bonding, chemical or mechanical adhesion to metallic or nonmetallic members may be performed.

### <Applications of conductive paper>

The conductive paper of the present embodiment is excellent in electrical conductivity, strength, and heat resistance. Therefore, it is preferably used in applications where these characteristics are required.

As an example of a preferred application of the conductive paper of the present embodiment, the formation of a conductive path between a rotating member and a fixed member can be mentioned. In particular, the formation of a conductive path for preventing electrolytic corrosion of a bearing that supports an inverter-controlled motor is preferred.

In conductive path applications, for example, the conductive paper is chemically or mechanically adhered onto the surface of a metallic member to form a metallic adherend. In such a metallic adherend, the conductive paper can be utilized as a conductive path. For example, a metallic member with a potential difference can be grounded via the conductive paper.

The metallic member is not particularly limited, but examples of rotating members include bearings, shafts, housings, shaft accessories, and housing accessories.

The metallic adherend of the present embodiment can be produced by a method of chemically or mechanically adhering the conductive paper of the present embodiment onto the surface of a metallic member.

Examples of the method of chemically or mechanically adhering the conductive paper include a method of adhering the conductive paper and a metallic member by a chemical reaction with an adhesive, a method of adhering the conductive paper and a metallic member by chemically adsorbing them with an adhesive component of a tape, and a method of mechanically fixing and adhering the conductive paper and a metallic member by caulking or unevenness.

### EXAMPLES

The present invention will be specifically described below using Examples, but the present invention is not limited to the following description.

### (Production of conductive paper)

First, conductive paper of Example 1 and Comparative Examples 1 to 3 were produced.

Example 1 satisfies all of the following conditions in the present invention: the conditions for the content of fibrillated fiber with respect to carbon fiber in the paper substrate; the conditions for the ratio of carbon fiber contained in the paper substrate; the conditions for the ratio of a cured product of a thermosetting resin in the conductive paper obtained from the same paper substrate; and the conditions for the production method in which a paper substrate is obtained by subjecting a slurry to a papermaking process, and the thermosetting resin is impregnated and cured. More specifically, the conductive paper of Example 1 has a fibrillated fiber content with respect to the carbon fiber in the paper substrate of 43% by mass, a carbon fiber content ratio in the paper substrate of 66% by mass, and a cured thermosetting resin content ratio in the conductive paper of 20% by mass. In addition, the method for producing the conductive paper of Example 1 involves: preparing a slurry containing a carbon fiber, a fibrillated fiber, and other components, and having a fibrillated fiber content with respect to the carbon fiber of 43% by mass; obtaining a paper substrate by subjecting the slurry to a papermaking process; impregnating the paper substrate with a thermosetting resin varnish; and heating the paper substrate impregnated with the thermosetting resin to cure the thermosetting resin.

Comparative Example 1 does not satisfy the conditions for the fibrillated fiber content with respect to the carbon fiber in the present invention, and the paper substrate does not contain a fibrillated fiber. More specifically, the conductive paper of Comparative Example 1 has a fibrillated fiber content with respect to the carbon fiber in the paper substrate of 0% by mass, a carbon fiber content ratio in the paper substrate of 95% by mass, and a cured thermosetting resin content ratio in the conductive paper of 20% by mass. In addition, the method for producing the conductive paper of Comparative Example 1 involves: preparing a slurry containing a carbon fiber and other components; obtaining a paper substrate by subjecting the slurry to a papermaking process; impregnating the paper substrate with a thermosetting resin varnish; and heating the paper substrate impregnated with the thermosetting resin to cure the thermosetting resin.

Comparative Example 2 does not satisfy the conditions for the fibrillated fiber content with respect to the carbon fiber in the present invention, and has a low fibrillated fiber content with respect to the carbon fiber in the paper substrate. More specifically, the conductive paper of Comparative Example 2 has a fibrillated fiber content with respect to the carbon fiber in the paper substrate of 5% by mass, a carbon fiber content ratio in the paper substrate of 90% by mass, and a cured thermosetting resin content ratio in the conductive paper of 20% by mass. In addition, the method for producing the conductive paper of Comparative Example 2 involves: preparing a slurry containing a carbon fiber, a fibrillated fiber, and other components, and having a fibrillated fiber content with respect to the carbon fiber of 5% by mass; obtaining a paper substrate by subjecting the slurry to a papermaking process; impregnating the paper substrate with a thermosetting resin varnish; and heating the paper substrate impregnated with the thermosetting resin to cure the thermosetting resin.

Comparative Example 3 does not satisfy the conditions for the fibrillated fiber content with respect to the carbon fiber in the present invention, and has a high fibrillated fiber content with respect to the carbon fiber in the paper substrate. More specifically, the conductive paper of Comparative Example 3 has a fibrillated fiber content with respect to the carbon fiber in the paper substrate of 156% by mass, a carbon fiber content ratio in the paper substrate of 37% by mass, and a cured thermosetting resin content ratio in the conductive paper of 20% by mass. In addition, the method for producing the conductive paper of Comparative Example 3 involves: preparing a slurry containing a carbon fiber, a fibrillated fiber, and other components, and having a fibrillated fiber content with respect to the carbon fiber of 156% by mass; obtaining a paper substrate by subjecting the slurry to a papermaking process; impregnating the paper substrate with a thermosetting resin varnish; and heating the paper substrate impregnated with the thermosetting resin to cure the thermosetting resin.

In other words, the conductive paper in Comparative Examples 1 to 3 is produced by the same production method as that employed in Example 1, but it does not satisfy the conditions regarding the fibrillated fiber content with respect to the carbon fiber in the paper substrate, and are outside the scope of the present invention.

All of the raw materials used in Example 1 and Comparative Examples 1 to 3 are the same. A PAN-based carbon fiber with a fiber diameter of 7 µm and a fiber length of 2 mm in the paper substrate was used as the carbon fiber; an aramid fiber with a freeness of 300 mL was used as the fibrillated fiber; and a thermoplastic resin, a paper strengthening agent, and a flocculant were used as other components, each in the same amount, with a total content of 5% by mass in the paper substrate.

Further, all of the thicknesses of the conductive paper in Example 1 and Comparative Examples 1 to 3 were 0.5 mm.

### (Evaluation of conductive paper)

Next, the strength and electrical conductivity of the conductive paper in Example 1 and Comparative Examples 1 to 3 were evaluated. The results are shown in Table 1.

The strength was evaluated by measuring the shear strength of the conductive paper. The shear strength measurement was carried out by a method in which the front and back sides of the conductive paper were respectively fixed to iron plates, and the iron plates were moved in the shear direction, that is, perpendicular to the thickness direction of the conductive paper, and the front and back iron plates were moved in opposite directions to shear and deform the conductive paper, and the maximum value of shear stress until the conductive paper was shear-fractured was taken as the shear strength.

The shear strength measurement was carried out when the size of the conductive paper was φ3 mm.

The electrical conductivity was evaluated by: producing donut-shaped conductive paper with an inner diameter of φ38.5 mm and an outer diameter of φ55.8 mm; sandwiching the front and back on the inner diameter side of the donut-shaped conductive paper between donut-shaped copper plates with an inner diameter of φ33 mm and an outer diameter of φ45 mm, and sandwiching the front and back on the outer diameter side of the donut-shaped conductive paper between donut-shaped copper plates with an inner diameter of φ49 mm and an outer diameter of 61 mm; forming a conductive path with the conductive paper from the copper plate on the inner diameter side of the conductive paper to the copper plate on the outer diameter side of the conductive paper; and measuring the resistance value of this conductive path in alternating current, that is, impedance. Here, the clamping pressure by the copper plates was set at 50N on both the inner diameter side and outer diameter side of the conductive paper. Further, the electrical conductivity was evaluated by the reciprocal of the measured impedance.

Regarding the evaluation results of strength and electrical conductivity, the reciprocal values of shear strength and impedance are shown respectively as relative values with the value of Comparative Example 1 taken as 100, and evaluation values more than 100 are judged to have improved performance.

**[Table 1]**

| | | Comparative Example 1 | Comparative Example 2 | Example 1 | Comparative Example 3 |
|---|---|---|---|---|---|
| Conductive paper | Ratio of fibrillated fiber with respect to carbon fiber (% by mass) | 0 | 5 | 43 | 156 |
| | Ratio of carbon fiber contained in paper substrate (% by mass) | 95 | 90 | 66 | 37 |
| | Ratio of fibrillated fiber contained in paper substrate (% by mass) | 0 | 5 | 29 | 58 |
| | Ratio of other components contained in paper substrate (% by mass) | 5 | 5 | 5 | 5 |
| | Ratio of cured thermosetting resin in conductive paper (% by mass) | 20 | 20 | 20 | 20 |
| Evaluation | Strength: shear strength | 100 | 210 | 640 | 1,230 |
| | Electrical conductivity: 1/impedance | 100 | 120 | 440 | 30 |

From Table 1, it can be seen that evaluation values for strength and electrical conductivity in Example 1 were more than 100, and were the highest when compared to those in Comparative Examples 1 to 3. The performance improved in Comparative Example 2 compared to that in Comparative Example 1, but the effects were not sufficiently large. The electrical conductivity decreased in Comparative Example 3 compared to that in Comparative Example 1. Therefore, the conductive paper of Example 1 was able to sufficiently improve strength and electrical conductivity.

## Claims

1. A conductive paper comprising:
a paper substrate containing at least a carbon fiber and a fibrillated fiber, and in which an amount of said fibrillated fiber is from 30 to 100% by mass with respect to said carbon fiber; and
a cured product of a thermosetting resin at least partially impregnated into said paper substrate,
wherein said fibrillated fiber is one or more selected from the group consisting of a cellulose fiber, an aramid fiber, an acrylic fiber, and a polyolefin fiber,
said fibrillated fiber has a freeness of 150 to 600 mL,
a ratio of said carbon fiber contained in the paper substrate is from 50 to 80% by mass, with respect to the total mass of the paper substrate, and
a thickness of said conductive paper is from 0.3 to 1.0 mm.

2. The conductive paper according to Claim 1, wherein a ratio of the cured product of the thermosetting resin contained in said conductive paper is from 10 to 55% by mass.

3. A method for producing conductive paper, the method comprising the steps of:
preparing a slurry containing at least a carbon fiber and a fibrillated fiber, and in which an amount of said fibrillated fiber is from 30 to 100% by mass with respect to said carbon fiber;
obtaining a paper substrate by subjecting said slurry to a papermaking process;
impregnating said paper substrate with a thermosetting resin; and
heating said paper substrate impregnated with said thermosetting resin to cure said thermosetting resin,
wherein said fibrillated fiber is one or more selected from the group consisting of a cellulose fiber, an aramid fiber, an acrylic fiber, and a polyolefin fiber,
said fibrillated fiber has a freeness of 150 to 600 mL,
a ratio of said carbon fiber contained in the paper substrate is from 50 to 80% by mass, with respect to the total mass of the paper substrate, and
a thickness of said conductive paper is from 0.3 to 1.0 mm.

4. The method for producing conductive paper according to Claim 3, wherein a ratio of a cured product of the thermosetting resin contained in said conductive paper is from 10 to 55% by mass.

5. A metallic adherend comprising:
a metallic member; and
the conductive paper according to Claim 1 or 2, which is chemically or mechanically adhered onto a surface of said metallic member.

6. A method for producing a metallic adherend, the method comprising chemically or mechanically adhering the conductive paper according to Claim 1 or 2 onto a surface of a metallic member.

## Patentansprüche

1. Leitfähiges Papier, umfassend:
ein Papiersubstrat, das mindestens eine Kohlenstofffaser und eine fibrillierte Faser enthält und in dem eine Menge der fibrillierten Faser, bezogen auf die Kohlenstofffaser, 30 bis 100 Masse-% beträgt; und
ein gehärtetes Produkt eines wärmehärtbaren Harzes, das mindestens teilweise in das Papiersubstrat imprägniert ist,
wobei die fibrillierte Faser eines oder mehrere, ausgewählt aus der Gruppe, bestehend aus einer Cellulosefaser, einer Aramidfaser, einer Acrylfaser und einer Polyolefinfaser, ist,
wobei die fibrillierte Faser einen Mahlgrad von 150 bis 600 mL aufweist,
ein Anteil der in dem Papiersubstrat enthaltenen Kohlenstofffaser, bezogen auf die Gesamtmasse des Papiersubstrats, 50 bis 80 Masse-% beträgt und
eine Dicke des leitfähigen Papiers 0,3 bis 1,0 mm beträgt.

2. Leitfähiges Papier nach Anspruch 1, wobei ein Anteil des in dem leitfähigen Papier enthaltenen gehärteten Produkts des wärmehärtbaren Harzes 10 bis 55 Masse-% beträgt.

3. Verfahren zur Herstellung von leitfähigem Papier, wobei das Verfahren die folgenden Schritte umfasst:
Herstellen einer Aufschlämmung, die mindestens eine Kohlenstofffaser und eine fibrillierte Faser enthält und in der eine Menge der fibrillierten Faser, bezogen auf die Kohlenstofffaser, 30 bis 100 Masse-% beträgt;
Erhalten eines Papiersubstrats, indem die Aufschlämmung einem Papierherstellungsprozess unterzogen wird;
Imprägnieren des Papiersubstrats mit einem wärmehärtbaren Harz; und
Erwärmen des mit dem wärmehärtbaren Harz imprägnierten Papiersubstrats, um das wärmehärtbare Harz zu härten,
wobei die fibrillierte Faser eines oder mehrere, ausgewählt aus der Gruppe, bestehend aus einer Cellulosefaser, einer Aramidfaser, einer Acrylfaser und einer Polyolefinfaser, ist,
wobei die fibrillierte Faser einen Mahlgrad von 150 bis 600 mL aufweist,
ein Anteil der in dem Papiersubstrat enthaltenen Kohlenstofffaser, bezogen auf die Gesamtmasse des Papiersubstrats, 50 bis 80 Masse-% beträgt und
eine Dicke des leitfähigen Papiers 0,3 bis 1,0 mm beträgt.

4. Verfahren zur Herstellung von leitfähigem Papier nach Anspruch 3, wobei ein Anteil eines in dem leitfähigen Papier enthaltenen gehärteten Produkts des wärmehärtbaren Harzes 10 bis 55 Masse-% beträgt.

5. Metallisches Fügeteil, umfassend:
ein metallisches Element; und
das leitfähige Papier nach Anspruch 1 oder 2, das chemisch oder mechanisch an einer Oberfläche des metallischen Elements haftet.

6. Verfahren zur Herstellung eines metallischen Fügeteils, wobei das Verfahren das chemische oder mechanische Anhaften des leitfähigen Papiers nach Anspruch 1 oder 2 auf eine Oberfläche eines metallischen Elements umfasst.

## Revendications

1. Papier conducteur comprenant :
un substrat en papier contenant au moins une fibre de carbone et une fibre fibrillée, dans lequel une quantité de ladite fibre fibrillée est de 30 à 100 % en masse par rapport à ladite fibre de carbone ; et
un produit durci d'une résine thermodurcissable au moins partiellement imprégné dans ledit substrat en papier,
dans lequel ladite fibre fibrillée est constituée d'un ou plusieurs éléments sélectionnés dans le groupe constitué par une fibre de cellulose, une fibre d'aramide, une fibre acrylique et une fibre de polyoléfine,
ladite fibre fibrillée présente un indice de freeness de 150 à 600 mL,
une proportion de ladite fibre de carbone contenue dans le substrat en papier est de 50 à 80 % en masse par rapport à la masse totale du substrat en papier, et
une épaisseur dudit papier conducteur est de 0,3 à 1,0 mm.

2. Papier conducteur selon la revendication 1, dans lequel une proportion du produit durci de la résine thermodurcissable contenu dans ledit papier conducteur est de 10 à 55 % en masse.

3. Procédé de production de papier conducteur, le procédé comprenant les étapes consistant à :
préparer une suspension contenant au moins une fibre de carbone et une fibre fibrillée, dans laquelle une quantité de ladite fibre fibrillée est de 30 à 100 % en masse par rapport à ladite fibre de carbone ;
obtenir un substrat en papier en soumettant ladite suspension à un procédé de fabrication de papier ;
imprégner ledit substrat en papier d'une résine thermodurcissable ; et
chauffer ledit substrat en papier imprégné de ladite résine thermodurcissable afin de durcir ladite résine thermodurcissable,
dans lequel ladite fibre fibrillée est constituée d'un ou plusieurs éléments sélectionnés dans le groupe constitué par une fibre de cellulose, une fibre d'aramide, une fibre acrylique et une fibre de polyoléfine,
ladite fibre fibrillée présente un indice de freeness de 150 à 600 mL,
une proportion de ladite fibre de carbone contenue dans le substrat en papier est de 50 à 80 % en masse par rapport à la masse totale du substrat en papier, et
une épaisseur dudit papier conducteur est de 0,3 à 1,0 mm.

4. Procédé de production de papier conducteur selon la revendication 3, dans lequel une proportion d'un produit durci de la résine thermodurcissable contenu dans ledit papier conducteur est de 10 à 55 % en masse.

5. Partie adhérée métallique comprenant :
un élément métallique ; et
le papier conducteur selon la revendication 1 ou 2, qui est fixé par adhérence chimique ou mécanique sur une surface dudit élément métallique.

6. Procédé de production d'une partie adhérée métallique, le procédé comprenant la fixation par adhérence chimique ou mécanique du papier conducteur selon la revendication 1 ou 2 sur une surface d'un élément métallique.
